# EUROPÄISCHE PATENTANMELDUNG

(11) **EP 0 846 743 A1**
(43) Veröffentlichungstag der Anmeldung: **10.06.1998**
(21) Anmeldenummer: 97120595.0
(22) Anmeldetag: 25.11.1997
(51) Int. Cl.: C09J 7/00, G06K 19/077

(54) **Thermoplastische härtbare Selbstklebefolie**

(30) Priorität: 03.12.1996 DE 19649949; 07.01.1997 DE 19700254
(71) Anmelder: Beiersdorf Aktiengesellschaft, 20245 Hamburg (DE)
(72) Erfinder: Engeldinger, Hans Karl, 25451 Hamburg (DE); Seitz, Kasten, Dr., 21614 Buxtehude (DE); Siepmann, Jürgen, 25436 Moorrege (DE)

(57) **Zusammenfassung**

Thermoplastische selbstklebende und hitzehärtbare Klebstoffolie zum Implantieren von elektrischen Modulen in einen Kartenkörper, der mit einer Aussparung versehen ist, in die ein elektronisches Modul anzuordnen ist, das auf der ersten Seite mehrere Kontaktflächen und auf der der ersten Seite gegenüberliegenden zweiten Seite einen IC-Baustein aufweist, dessen Anschlußpunkte über elektrische Leiter mit den Kontaktflächen verbunden sind, wobei die Klebstoffolie zur Verbindung der zweiten Seite des Moduls mit dem Kartenkörper dient, dadurch gekennzeichnet, daß die Klebstoffolie die Kombination folgender Bestandteile aufweist:
i) eines thermoplastischen Polymers mit einem Anteil von 30 bis 90 Gew.-%, und dazu
ii) eines oder mehrerer klebrigmachender Harze mit einem Anteil von 5 bis 50 Gew.-% und (oder alternativ)
iii) von Epoxidharzen mit Härtern, ggf. auch Beschleuniger, mit einem Anteil von 5 bis 40 Gew.-%.

## Beschreibung

Die Erfindung beschreibt eine thermoplastische Klebstoffolie, die zunächst selbstklebend ist und dann zum Erreichen hoher Klebfestigkeiten weiter gehärtet werden kann. Eine solche Folie ist geeignet zur Herstellung von Klebverbindungen, besonders auch zum Implantieren von elektrischen Modulen in einen Kartenkörper unter Einwirkung von Druck und Wärme. Ein derartiger, fertig verklebter Verbund wird als 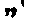 Chipkarte" oder 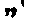 Smart Card" bezeichnet.

Datenträger mit integriertem Schaltkreis sind bekannt und wert verbreitet, z. B. als Telefonkarten, Identifikationskarten, Bankkarten o. a. Die Trägerelemente für die Chips - auch Module genannt - werden in die entsprechend dimensionierten Aushöhlungen des Kartenkörpers maschinell in schneller Folge implantiert. Zur Fixierung dient dabei ein Klebsystem.

Allerdings sind nicht alle Klebsysteme für diese Aufgabe geeignet. Klebstoffe mit Lösungsmittel greifen das Kartenmaterial an, während zweikomponentige Reaktions-klebstoffe nicht schnell genug aushärten.

Vielfach eingesetzt werden flüssige Klebstoffe auf Cyanacrylat-Basis ( Methyl- bis Butylester ), weil diese bei Raumtemperatur schnell aushärten. Für Arbeitstakte unterhalb einer Sekunde, wie sie heute bereits in der Herstellung derartiger Karten gefordert werden, ist deren Reaktionsgeschwindigkeit dennoch recht gering.

Da die Polymerisation der Cyanacrylate bekanntlich durch H₂O-Moleküle initiiert wird, entstehen wertere Probleme dadurch, daß wechselnde Luftfeuchtigkeit die Aushärtung beeinflusst. Auch die Polartäten von Karten- und Modulmaterial haben Einfluß auf die Reaktionsgeschwindigkeit.

Schließlich können Produktionsstörungen durch ungezieltes Aushärten des Klebstoffs im Bereich der Produktionslinie, z. B. ein Verstopfen der Auftragsdüsen, auftreten. Ebenfalls ungünstig ist das gelegentlich auftretende Ausquetschen von Klebstoff zwischen Modul und Kartenmaterial. Oft kommt es auch zu dem als 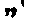 Blooming bezeichneten Effekt, bei dem Cyanacrylat-Dämpfe die Kartenoberfläche nahe der Klebstelle irreversibel mattweiß verfärben.

Als sehr großer Nachteil ist die Härte und Sprödigkeit der Klebefuge anzusehen, weil das häufige Biegen im Lebenslauf einer Chipkarte wegen der mangelnden Flexibilität zum Versagen der Verklebung führen kann.

Reine selbstklebende Systeme, wie sie z.B. in EP-A 521 502 beschrieben werden, erfüllen zumeist nicht die Anforderungen an die Festigkeit der Verklebung, so daß mit diesen hergestellte Datenträger oft nicht den an sie gestellten Ansprüchen bezüglich Einsatzsicherheit gerecht werden. Auch wenn besonders leistungsfähige doppelseitige Selbstklebefolien ausgewählt werden, reicht deren Festigkeit bei erhöhten Temperaturen von mehr als 40 °C, wie sie bei Lagerung und Gebrauch der Karten in warmen Ländern und Jahreszeiten vorkommen, in der Regel nicht mehr aus.

Auch die in EP-A 493 738 als Heißklebeband (17) gekennzeichneten filmförmigen Schmelzklebstoffe, die sogenannten Hotmelts, die z. B. als Ethylenvinylacetat ( EVA ) oder Styrolbutadien-Copolymer ( SBS ) bei Raumtemperatur eher plastisches Verhalten aufweisen, werden nicht allen an sie gestellten Anforderungen beim Verkleben des Moduls mit dem Kartenkörper gerecht, insbesondere erreichen sie nicht die benötigte Wärmefestigkeit.

Gleiches gilt auch für nicht filmförmige, durch Aufschmelzen flüssig gemachte und dann applizierte Schmelzklebstoffe. Bei diesen Produkten kommt als weiterer Nachteil die aufwendige Auftragstechnik hinzu.

Die bekannten Datenträger und deren Herstellung weisen demnach für die Praxis bedeutsame Nachteile auf. Bei mit herkömmlichen Klebern hergestellte Datenträgem ist die Verarbeitungsgeschwindigkeit für sehr große Stückzahlen zu gering. Aber auch die thermoaktrivierbaren, reaktiven Klebefolien sind nicht ohne Einschränkung einsetzbar. Derartige Klebfolien, die mit einer Dicke von ungefähr 70 µm im Handel zu beziehen sind, verlangen beim Heißverpressen eine Temperatur von mindestens 120 °C, erzeugt von einem Preßstempel mit erheblich höherer Temperatur, um eine verläßliche Verklebung zu erreichen. Bei einer derartigen, auch kurzzeitigen Temperaturbeanspruchung können die aus Kunststoff gefertigten Datenträger aber leicht beschädigt werden. Ferner treten im Boden der Datenträger Verformungen auf, die die spätere reibungslose Verwendung der Datenträger beeinträchtigen können.

Der Erfindung liegt nun die Aufgabe zugrunde, eine Klebstoffolie zu schaffen, die selbst und bei ihrer Verwendung die Nachteile des Standes der Technik nicht oder zumindest nicht in dem Umfang aufweist.

Gelöst wird diese Aufgabe durch eine Klebstoffolie, wie sie in den Patentansprüchen näher gekennzeichnet ist.

Thermoplastische Klebstoffolien auf der Basis von Polymeren wie Polyurethanen, Polyestern, Polyamiden oder Polyolefinen und deren Derivaten, genügen den an sie bei der Verklebung von Modulen mit dem Kartenkörper gestellten Anforderungen bereits zu einem gewissen Teil. Ihre Kohäsion und spezifische Haftung auf Kunststoffen bewirkt eine begrenzte Verbundfestigkeit. Weiterhin gewährleistet die bei Raumtemperatur dominierende hohe Elastizität gute Biegefestigkeit.

Überraschend gelang es nun, durch Zusätze von nichtreaktiven Harzen und/oder reaktiven Harz/Härter-Systemen die hohen Aktivierungstemperaturen der unmodifizierten Polymeren zu senken - bis zur Selbstklebrigkeit - , gleichzeitig die Adhäsion zu steigern und auf diese Weise eine Klebfolie zu erhalten, welche zum Erreichen hoher Festigkeiten weiter gehärtet werden kann.

Die bevorzugte Ausführungsform der erfindungsgemäßen thermoplastischen Klebstoffolie basiert auf einem thermoplastischen Polyurethan. Thermoplastische Polyurethane sind als Reaktionsprodukte aus Polyester- oder Polyetherpolyolen und organischen Diisocyananten wie Diphenylmethandiisocyanat oder Hexamethylendiisocyanat, seltener Toluylendiiso-cyanat, bekannt. Sie sind aus überwiegend linearen Makromolekülen aufgebaut. Solche Produkte sind zumeist in Form elastischer Granulate im Handel erhältlich, z. B. von der Firma Bayer AG unter dem Handelsnamen 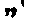 Desmocoll".

Mittels Extrusion durch eine Breitschlitzdüse lassen sich thermoplastische Polyurethane zu einer Folie verarbeiten. Eine andere bekannte Möglichkeit besteht in der Ausbreitung von Lösungen thermoplastischer Polyurethane auf silikonisiertem Papier mit anschließender Trocknung, wobei beispielsweise Ethylacetat, Aceton, Methylethylketon oder Benzin bzw. Mischungen daraus als Lösungsmittel eingesetzt werden können.

Die Erweichungstemperaturen dieser PU-Folien liegen in ähnlicher Größenordnung wie die der üblichen Kunststoffe, aus denen die Kartenkörper hergestellt werden. Eine Verwendung als Klebstoffolie zum Implantieren der Module ist daher nur eingeschränkt möglich, denn beim Herstellungsprozeß muß der Preßstempel des Klebautomaten so hoch erhitzt werden, daß das Kartenmaterial mitverformt wird. Solch verformte Karten sind aber in der Regel für den späteren Gebrauch nur eingeschränkt oder gar nicht geeignet.

Durch Kombination von thermoplastischem PU mit ausgewählten verträglichen Harzen kann die Erweichungstemperatur der Klebstoffolie soweit gesenkt werden, daß eine Verformung des Kartenkörpers während des Herstellungsprozeßes weitgehend verringert oder ganz ausgeschlossen wird. Wir fanden heraus, daß parallel dazu eine Erhöhung der Adhäsion auftritt. Bei ausreichend hohem Harzanteil kann sogar Selbstklebrigkeit erzielt werden.

Als geeignete Harze haben sich beispielsweise bestimmte Kolophonium-, Kohlen-wasserstoff- und Cumaronharze erwiesen. Art und Mengenanteil des Harzes muß individuell ermittelt und sorgfältig abgestimmt werden, damit im lösemittelfreien Gesamtsystem keine Entmischung eintritt.

Alternativ dazu oder ergänzend kann die Reduzierung der Erweichungstemperatur der Klebstoffolie durch die Kombination von thermoplastischem PU mit ausgewählten Epoxidharzen auf der Basis von Bisphenol A und/oder F und latentem Härter, ggf. unter Zusatz von Beschleuniger, erreicht werden. Eine Klebstoffolie aus einem derartigen System erlaubt ein Nachhärten der Klebfuge, entweder allmählich bei Raumtemperatur ohne jeden weiteren äußeren Eingriff oder kurzzeitig durch eine gezielte Temperierung der Karten nach der Herstellung. Auf diese Weise kann ein späteres, zerstörungsfreies Herauslösen des Chips in krimineller Absicht, z. B. unter Verwendung eines Lötkolbens oder üblichen Bügeleisens, unterbunden werden.

Darüber hinaus weisen die mit einer erfindungsgemäßen Klebstoffolie hergestellten Modulklebungen eine besonders hohe Biegefestigkeit auf. Dies wird bewiesen durch Ausführung des Dauerbiegetests oder Torsionstestes unter ständigem Lastwechsel gemäß DIN EN 20 178.

Überraschend fanden wir heraus, daß durch Kombination der drei beschriebenen Systeme, nämlich Thermoplasten (vornehmlich thermopl. PU), klebrigmachendem Harz und latent reaktiven Epoxidharzmischungen ein bei Raumtemperatur selbstklebendes System hergestellt werden kann, das bei Erwärmung weitervernetzt. Dabei steigt die Kohäsion (und damit die Klebfestigkeit) weiter an.

Ein solches Klebsystem - besonders in Form einer Klebfolie - ist bei der Chipkarten-herstellung von besonderem Vorteil. Es erlaubt das Applizieren der Klebfolie auf den Modulgurt sowie das spätere Einsetzen der gestanzten Module in die Karte ohne Wärmeunterstützung. Das nachfolgende Anpressen kann unter mäßiger Wärme stattfinden, so daß die Deformation der Kartenrückseite unterdrückt wird oder ganz unterbleibt. Die Sicherheit des implantierten Chipmoduls kann anschließend durch längeres Temperieren der fertigen Karte erhöht werden - z.B. durch 12-stündige Lagerung bei 70 °C.

Klebstoffe und insbesondere Klebstoff-Folien der beschriebenen Art sind darüberhinaus zu einer Heißhärtung fähig und damit zur Herstellung struktureller, also hochfester Kleb-verbindungen. Insgesamt vereinigen sie die Vorteile der Selbstklebrigkeit - also Haftung bei Raumtemperatur - mit der Fähigkeit zum Erreichen hoher Klebfestigkeiten nach Heißhärtung (z.B. nach 30 Min. bei 150 °C).

Zusammengefaßt: Die erfindungsgemäßen Klebstoffolien zeichnen sich durch eine Reihe von Vorteilen aus:
* Sie sind bei Raumtemperatur selbstklebend.
* Sie sind aktivierbar unterhalb der Erweichungstemperatur üblicher Kartenmaterialien unter Erhöhung der Adhäsion.
* Sie zeigen eine hohe spezifische Adhäsion auf den üblichen Chip-Kartenmaterialien wie beispielsweise PVC, ABS, PET oder PC.
* Sie besitzen im verklebten Zustand eine hohe Kohäsion und Elastizität bei Raumtemperatur
* Sie vernetzen weiter bei erhöhter Temperatur (z.B. 70 °C) unter Erhöhung der Kohäsion.
* Sie liefern nach Heißhärtung (z.B. 150 °C) hohe Festigkeiten, geeignet für strukturelles Kleben.

Im folgenden soll die erfindungsgemäße Klebstoffolie mit Hilfe von Beispielen näher beschrieben werden, ohne die Erfindung damit unnötig einschränken zu wollen.

Die aufgeführte beispielhafte Zusammensetzung für die Klebstoffolie lläßt sich durch Veränderung von Rohstoffart und -anteil in weitem Rahmen variieren. Ebenso können weitere Produkteigenschaften wie beispielsweise Farbe, thermische oder elektrische Leitfähigkeit durch gezielte Zusätze von Farbstoffen, mineralischen bzw. organischen Füllstoffen und/oder Kohlenstoff- bzw. Metallpulvern erzielt werden.

Die nachstehend beschriebenen Produkte können sowohl lösungsmittelfrei als auch aus Lösung hergestellt werden.

Bei der lösungsmittelfreien Herstellung werden die einzelnen Bestandteile unter Ausschlüß des latenten Härters im Kneter bei 150 °C vorgemischt und anschließend bei 80 bis 110 °C unter Zumischung des Härters über eine Breitbandschlitzdüse zu einer Folie extrudiert und auf Trennpapier aufgewickelt. Diese Herstellungsweise ist für dickere Folien von 80 bis 500 µm und darüber geeignet.

Bei der Herstellung der Klebstoffolie aus Lösung werden die Bestandteile in einem Lösungsmittelgemisch aus 40 Gew.-% Ethylacetat und 60 Gew.-% Aceton gelöst, vorzugsweise mit einem Feststoffanteil von ungefähr 40 Gew.-%. Diese Lösung wird mittels Rakel in definierter Schichtstärke auf Silikonpapier aufgebracht und getrocknet. Das Verfahren eignet sich zur Herstellung dünner Klebstoffolien mit Trockenschichtdicken zwischen 20 und 100 µm.

### Beispiel

| Chem. Basis | Handelsbezeichnung | Anteil in Gew.-% |
|---|---|---|
| Thermoplast. PU | Desmocoll 400 ( Bayer AG) | 40,0 |
| Kolophoniumharz | Harz 731 D (Abieta Chemie) | 33,0 |
| Epoxidharz (Bisphenol A/F) | Rütapox 0164 (Bakelite AG) | 24,0 |
| Dicyandiamid | Dyhard 100 S (SKW Trostberg) | 2,1 |
| Dichlorphenyldimethylharnstoff | Diuron (Du Pont) | 0,4 |
| SiO₂, amorph | Aerosil 200 ( Degussa ) | 0,5 |

Bei einer Chipkarte, die mit einer Klebstoffolie nach diesem Beispiel hergestellt wird, ist ein nachträgliches, mißbräuchliches Entfernen des Chips kaum mehr möglich, wenn diese nach dem eigentlichen Herstellungsprozeß noch 10 Stunden lang bei einer Temperatur von circa 70 °C gelagert wird.

## Patentansprüche

1. Thermoplastische selbstklebende und hitzehärtbare Klebstoffolie zum Implantieren von elektrischen Modulen in einen Kartenkörper, der mit einer Aussparung versehen ist, in die ein elektronisches Modul anzuordnen ist, das auf der ersten Seite mehrere Kontaktflächen und auf der der ersten Seite gegenüberliegenden zweiten Seite einen IC-Baustein aufweist, dessen Anschlußpunkte über elektrische Leiter mit den Kontaktflächen verbunden sind, wobei die Klebstoffolie zur Verbindung der zweiten Seite des Moduls mit dem Kartenkörper dient, dadurch gekennzeichnet, daß die Klebstoffolie die Kombination folgender Bestandteile aufweist:
i) eines thermoplastischen Polymers mit einem Anteil von 30 bis 90 Gew.-%, und dazu
ii) eines oder mehrerer klebrigmachender Harze mit einem Anteil von 5 bis 50 Gew.-% und (oder alternativ)
iii) von Epoxidharzen mit Härtern, ggf. auch Beschleuniger, mit einem Anteil von 5 bis 40 Gew.-%.

2. Thermoplastische Klebstoffolie nach Anspruch 1, dadurch gekennzeichnet, daß es sich bei dem thermoplastischen Polymer um ein Polyurethan handelt.

3. Thermoplastische Klebstoffolie nach Anspruch 1, dadurch gekennzeichnet, daß die Klebstoffolie mit einem oder mehreren Additiven wie Farbstoffen, mineralischen bzw. organischen Füllstoffen, beispielsweise Siliziumdioxid, Kohlenstoffpulvern und Metallpulvern abgemischt ist.

4. Thermoplastische Klebstoffolie nach Anspruch 1, dadurch gekennzeichnet, daß die Klebstoffolie eine Dicke von 20 bis 500 µm aufweist.

5. Thermoplastische Klebstoffolie nach Anspruch 1, dadurch gekennzeichnet, daß die Klebstoffolie für ein Heißverpressen bei Temperaturen unter 120 °C, insbesondere bei 60 bis 100 °C, geeignet ist.

6. Thermoplastische Klebstoffolie nach Anspruch 1, dadurch gekennzeichnet, daß die Klebstoffolie die gleichen Maße wie das Modul hat und als Stanzling vorliegt.

7. Verwendung einer thermoplastischen Klebstoffolie nach einem der Ansprüche 1 bis 6 zum Implantieren von elektrischen Modulen in einen Kartenkörper, der mit einer Aussparung versehen ist, in die ein elektronisches Modul anzuordnen ist, das auf der ersten Seite mehrere Kontaktflächen und auf der der ersten Seite gegenüberliegenden zweiten Seite einen IC-Baustein aufweist, dessen Anschlußpunkte über elektrische Leiter mit den Kontaktflächen verbunden sind, wobei die Klebstoffolie zur Verbindung der zweiten Seite des Moduls mit dem Kartenkörper dient, ggf. mit anschließender Hitzehärtung.

8. Verwendung einer Klebstoffolie nach einem der Ansprüche 1 - 6 zum strukturellen Kleben, ggf. mit anschließender Hitzehärtung.
